# EUROPEAN PATENT APPLICATION

(11) **EP 4 407 093 A1**
(43) Date of publication of application: **31.07.2024**
(21) Application number: 22889210.5
(22) Date of filing: 28.10.2022
(51) Int. Cl.: D06P 3/80, C08J 5/08, D06M 11/00, D06M 13/00, B42D 25/415

(54) **COLORED FIBER, COLORED FIBER PART, FIBER REINFORCED COMPOSITE MATERIAL, STRUCTURAL PART, AND PREPARATION METHOD**

(30) Priority: 02.11.2021 CN 202111290526
(71) Applicant: Huawei Technologies Co., Ltd., Shenzhen, Guangdong 518129 (CN)
(72) Inventor: WANG, Xiaofei, Shenzhen, Guangdong 518129 (CN)
(74) Representative: Gill Jennings & Every LLP
(86) International application number: PCT/CN2022/128407
(87) International publication number: WO 2023/078185

(57) **Abstract**

A colored fiber, a colored fiber part, a fiber reinforced composite material, a structural part, and a preparation method are disclosed, which relate to the field of fiber materials. The colored fiber includes a transparent inorganic fiber and a pigment. The transparent inorganic fiber is of a hollow structure, and the pigment is located inside a cavity of the transparent inorganic fiber. A color of the colored fiber is transparent, and the pigment is protected by the transparent inorganic fiber and is not easily worn or damaged. A method for preparing the colored fiber is simple and easy to operate, has relatively low costs, and is not subject to too many limitations in a process of adding the pigment to the transparent inorganic fiber, so as to meet a customization requirement of fast iteration of a colored fiber product.

## Description

The present disclosure claims priority to Chinese Patent Application No. 202111290526.4, filed on November 2, 2021 and entitled "COLORED FIBER, COLORED FIBER PART, FIBER REINFORCED COMPOSITE MATERIAL, STRUCTURAL PART, AND PREPARATION METHOD", which is incorporated herein by reference in its entirety.

### TECHNICAL FIELD

The present disclosure relates to the field of fiber materials, and in particular, to a colored fiber, a colored fiber part, a fiber reinforced composite material, a structural part, and a preparation method.

### BACKGROUND

A glass fiber is an inorganic fiber material, and has high mechanical strength, strong heat resistance, good corrosion resistance, and other advantages. A glass fiber reinforced composite material obtained based on the glass fiber also has excellent strength, and is widely used in various products that have both light weight and high strength requirements. As a user has an increasingly high requirement for a visual effect of a product appearance, a colored glass fiber has emerged, and the colored glass fiber is obtained by coloring a transparent glass fiber.

The conventional technology provides the following methods for obtaining the colored glass fiber: blending color powder with a raw material for preparing a glass fiber, and integrally forming the colored glass fiber through melt spinning; and coating a colored layer on a surface of the glass fiber to obtain the colored glass fiber.

However, when the colored glass fiber is prepared by blending the color powder with the raw material for preparing the glass fiber, blending costs are relatively high during production; and when the colored glass fiber is prepared by coating the colored layer on the surface of the glass fiber, the preparation difficulty is relatively high, and mechanical strength and heat resistance of the colored layer are usually lower than those of the glass fiber, and consequently the colored layer is easily worn in an application process of the colored glass fiber.

### SUMMARY

In view of this, the present disclosure provides a colored fiber, a colored fiber part, a fiber reinforced composite material, a structural part, and a preparation method, to resolve the foregoing technical problems.

According to one aspect, a colored fiber is provided, where the colored fiber includes a transparent inorganic fiber and a pigment, the transparent inorganic fiber is of a hollow structure, and the pigment is located inside a cavity of the transparent inorganic fiber.

According to the colored fiber provided in this embodiment of the present disclosure, the pigment is arranged inside the cavity of the transparent inorganic fiber, and a color of the pigment can be transmitted from inside of the transparent inorganic fiber to outside of the transparent inorganic fiber and then observed, so that the transparent inorganic fiber is assigned a color. Because the pigment is transmitted through a transparent inorganic fiber body through the cavity of the transparent fiber, the color of the colored fiber is transparent. The pigment is protected by the transparent inorganic fiber and is not easily worn or damaged, which improves color stability of the colored fiber. In addition, a material of the transparent inorganic fiber is not affected by the pigment, so that the colored fiber has all advantages of the inorganic fiber.

During preparation of the colored fiber, the pigment is arranged inside the cavity of the transparent inorganic fiber, so that a method for preparing the colored fiber is simple and easy to operate, and costs are relatively low. In addition, a process of adding the pigment to the transparent inorganic fiber is not excessively limited. This is not only suitable for mass preparation of the colored fiber, but also is highly advantageous for quick customization of a small batch of colored fibers of a specific color, so as to meet a customization requirement of fast iteration of a colored fiber product.

In some possible implementations, a length of the colored fiber is greater than 10 mm. Further, the length of the colored fiber is greater than or equal to 5 cm, greater than or equal to 10 cm, greater than or equal to 20 cm, greater than or equal to 30 cm, greater than or equal to 40 cm, greater than or equal to 50 cm, greater than or equal to 60 cm, greater than or equal to 70 cm, greater than or equal to 80 cm, greater than or equal to 90 cm, greater than or equal to 100 cm, or the like.

In some possible implementations, the pigment includes at least one of color powder, a temperature-sensitive color changing pigment, a photosensitive color changing pigment, or an electrochromic pigment.

In some possible implementations, a part of the cavity of the transparent inorganic fiber does not include the pigment.

In some possible implementations, the entire cavity of the transparent inorganic fiber is filled with the pigment.

According to another aspect, a colored fiber part is provided, where the colored fiber part includes a plurality of colored fibers connected to each other; and
the colored fiber is any one of the foregoing colored fibers.

According to the colored fiber part provided in this embodiment of the present disclosure, the plurality of colored fibers are connected to each other to form the colored fiber part. A manner of connecting the plurality of colored fibers to each other is determined based on a structure of the colored fiber part. The manner of connecting the plurality of colored fibers to each other includes but is not limited to winding, weaving, or the like.

In some possible implementations, the colored fiber part is a fiber yarn or a fiber fabric.

In some possible implementations, at least some of the plurality of colored fibers of the colored fiber part have different colors. This case includes: the colors of some colored fibers are different (correspondingly, the colors of some colored fibers are the same); and the colors of all colored fibers are different.

In some possible implementations, the plurality of colored fibers of the colored fiber part have a same color.

According to still another aspect, a fiber reinforced composite material is provided, where the fiber reinforced composite material includes a resin matrix and a reinforcement, and the reinforcement is located inside the resin matrix; and
the reinforcement includes any one of the foregoing colored fibers or colored fiber parts.

For example, the resin matrix may be thermosetting resin, or may be thermoplastic resin. The thermosetting resin includes but is not limited to epoxy resin, phenolic resin, unsaturated resin, and a curing agent corresponding to each of the foregoing optional resins. The thermoplastic resin includes but is not limited to polyester resin. For example, the polyester resin includes but is not limited to polycarbonate (Polycarbonate, PC) and thermoplastic urethane (Thermoplastic Urethane, TPU) elastomer.

Based on use of the colored fiber part provided in the embodiments of the present disclosure, the fiber reinforced composite material provided in this embodiment of the present disclosure not only has a specific color, but also can present various appearance effects. In addition, the fiber reinforced composite material obtains a fiber reinforcement effect, so that the fiber reinforced composite material has at least advantages such as light weight, high strength, and excellent chemical resistance, and has a much higher mechanical performance than that of the resin matrix.

According to still another aspect, a structural part is provided, where the structural part is prepared by using the foregoing fiber reinforced composite material.

In some examples, the structural part includes but is not limited to a housing part, a mechanical part, a plate, and the like. For example, the housing may be used in an electronic product (for example, a computer, a mobile phone, a sound box, or a camera), a home product, a vehicle product (for example, a car), a chemical equipment product, and the like; the mechanical part includes but is not limited to a screw, a clamp, a gear, a bearing, a sealing ring, and the like; and the plate includes but is not limited to a flat plate, a wave plate, and a bent plate.

According to still another aspect, a method for preparing a colored fiber is provided, where the colored fiber is shown above. The method for preparing a colored fiber includes: providing a pigment solution, where the pigment solution includes a pigment;
immersing one end of a transparent inorganic fiber into the pigment solution, and enabling the pigment solution to be inhaled into a cavity of the transparent inorganic fiber under pressure, to form a colored fiber intermediate; and
performing post-processing on the colored fiber intermediate to obtain the colored fiber.

In some possible implementations, the enabling the pigment solution to be inhaled into a cavity of the transparent inorganic fiber under pressure includes:
applying negative pressure to the other end of the transparent inorganic fiber, and enabling the pigment solution to be inhaled into the cavity of the transparent inorganic fiber under the negative pressure.

In some possible implementations, the fiber reinforced composite material is shown above; and
the method for preparing a fiber reinforced composite material includes: preparing a colored fiber part; and
combining the colored fiber part as a reinforcement with a resin matrix to obtain the fiber reinforced composite material.

In some possible implementations, the preparing a colored fiber part includes:
preparing a transparent fiber part by using a plurality of transparent inorganic fibers;
providing a pigment solution including a pigment;
immersing one end of the transparent fiber part into the pigment solution, and enabling enable the pigment solution to be inhaled into cavities of the transparent inorganic fibers of the transparent fiber part under pressure, to form a colored fiber part intermediate; and
performing post-processing on the colored fiber part intermediate to obtain the colored fiber part.

In some possible implementations, the enabling the pigment solution to be inhaled into cavities of the transparent inorganic fibers of the transparent fiber part under pressure includes:
applying negative pressure to the other end of the transparent fiber part, and enabling the pigment solution to be inhaled into the cavities of the transparent inorganic fibers of the transparent fiber part under the negative pressure.

According to still another aspect, another method for preparing a fiber reinforced composite material is provided, where the fiber reinforced composite material is shown above; and
the method for preparing a fiber reinforced composite material includes: combining a resin matrix with a plurality of transparent inorganic fibers to obtain a first composite material intermediate;
processing the first composite material intermediate, and enabling two ends of each of the plurality of transparent inorganic fibers to be exposed outside an end face of the resin matrix, to obtain a second composite material intermediate;
providing a pigment solution including a pigment, immersing one end of the transparent inorganic fiber of the second composite material intermediate into the pigment solution, and enabling the pigment solution to be inhaled into a cavity of the transparent inorganic fiber under pressure, so as to obtain a third composite material intermediate; and
performing post-processing on the third composite material intermediate to obtain the fiber reinforced composite material.

In some possible implementations, the enabling the pigment solution to be inhaled into a cavity of a transparent inorganic fiber of the transparent fiber part under pressure includes:
applying negative pressure to the other end of the transparent inorganic fiber of the second composite material intermediate, and enabling the pigment solution to be inhaled into the cavity of the transparent inorganic fiber under the negative pressure.

### BRIEF DESCRIPTION OF DRAWINGS

FIG. 1 is an example schematic diagram of a longitudinal cross-section of a colored fiber according to an embodiment of the present disclosure;
FIG. 2 is another example schematic diagram of a longitudinal cross-section of a colored fiber according to an embodiment of the present disclosure;
FIG. 3 is an example schematic diagram of an axial cross-section of a colored fiber according to an embodiment of the present disclosure;
FIG. 4 is another example schematic diagram of an axial cross-section of a colored fiber according to an embodiment of the present disclosure;
FIG. 5 is an example flowchart of preparing a colored fiber according to an embodiment of the present disclosure;
FIG. 6 is a schematic diagram showing that a pigment solution is inhaled into a cavity of a transparent inorganic fiber according to an embodiment of the present disclosure;
FIG. 7 is an example schematic diagram of a colored fiber part with a structure of a fiber yarn according to an embodiment of the present disclosure;
FIG. 8 is an example schematic diagram of a colored fiber part of a fiber fabric structure according to an embodiment of the present disclosure;
FIG. 9 is an example flowchart of preparing a colored fiber part according to an embodiment of the present disclosure;
FIG. 10 is another example flowchart of preparing a colored fiber part according to an embodiment of the present disclosure;
FIG. 11 is an example schematic diagram of alternate coloring of a colored fiber fabric according to an embodiment of the present disclosure;
FIG. 12 is an example schematic diagram of irregular coloring of a colored fiber fabric according to an embodiment of the present disclosure;
FIG. 13 is an example schematic diagram of gradient coloring of a colored fiber fabric according to an embodiment of the present disclosure;
FIG. 14 is an example flowchart of preparing a fiber reinforced composite material according to an embodiment of the present disclosure;
FIG. 15 is an example schematic diagram of a manner of combining a reinforcement and a resin matrix according to an embodiment of the present disclosure;
FIG. 16 is a schematic diagram of a manner of laying a reinforcement and a resin matrix according to an embodiment of the present disclosure;
FIG. 17 is another example schematic diagram of a manner of combining a reinforcement and a resin matrix according to an embodiment of the present disclosure;
FIG. 18 is another example flowchart of preparing a fiber reinforced composite material according to an embodiment of the present disclosure; and
FIG. 19 is a diagram showing structural arrangement corresponding to preparation of a third composite material intermediate based on a second composite material intermediate according to an embodiment of the present disclosure.

### Descriptions of reference numerals:

100-Transparent inorganic fiber;
101-Cavity;
200-Pigment;
001-Colored fiber;
002-Colored fiber part;
003-Resin matrix; and
004-Fiber reinforced composite material.

### DESCRIPTION OF EMBODIMENTS

To make technical solutions and advantages of the present disclosure clearer, the following further describes implementations of the present disclosure in detail with reference to the accompanying drawings.

A glass fiber is an inorganic fiber material, and has high mechanical strength, strong heat resistance, good corrosion resistance, and other advantages. A glass fiber reinforced composite material obtained based on the glass fiber also has excellent strength, and is widely used in various products that have both light weight and high strength requirements. As a user has an increasingly high requirement for a visual effect of a product appearance, a colored glass fiber has emerged, and the colored glass fiber is obtained by coloring a transparent glass fiber.

The conventional technology mainly provides the following methods for obtaining the colored glass fiber: (1) blending color powder with a raw material for preparing a glass fiber, and integrally forming the colored glass fiber through melt spinning; and (2) coating a colored layer on a surface of the glass fiber to obtain the colored glass fiber.

For the method in (1), because the color powder and the glass fiber are directly blended, a raw material formula needs to be correspondingly customized for the colored glass fiber based on the target color. In a process of customizing the raw material formula, a plurality of rounds of iteration are required to achieve an expected effect, resulting in relatively high blending costs during production. In addition, even if a demand for colored fibers is very low, it means that a large quantity of glass raw materials are wasted, and production costs are higher. Consequently, this method cannot meet a customization requirement for fast iteration of colored fiber products.

In the method in (2), the colored glass fiber is prepared by coating the surface of the glass fiber with a colored layer, and it is relatively difficult to prepare the colored glass fiber (for example, in a process such as weaving, cutting, hot-pressing injection molding, or molding processing, the colored layer is easily worn, or the colored layer is easily damaged due to insufficient heat resistance), and mechanical strength and heat resistance of the colored layer are generally lower than those of a glass fiber, the colored layer is easily worn in application of the colored glass fiber. In addition, in a preparation process of the colored layer, an appearance effect, mechanical toughness, temperature resistance, and a bonding force with the glass fiber of the colored layer need to be considered, which further increases the preparation difficulty.

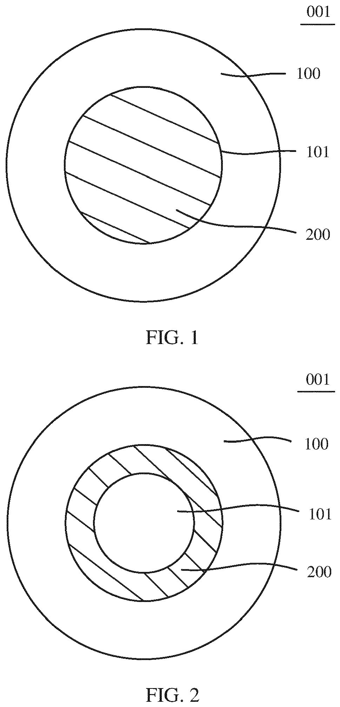

According to an aspect of the present disclosure, an embodiment of the present disclosure provides a colored fiber 001. As shown in FIG. 1, the colored fiber 001 includes a transparent inorganic fiber 100 and a pigment 200. The transparent inorganic fiber 100 is of a hollow structure, and the pigment 200 is located inside a cavity 101 of the transparent inorganic fiber 100.

The transparent inorganic fiber 100 of a hollow structure in this embodiment of the present disclosure includes a transparent inorganic fiber body, and a cavity that extends in an axial direction of the inorganic fiber body and passes through two ends of the inorganic fiber body.

All transparent inorganic fibers are applicable to this embodiment of the present disclosure. Because of transparency of the inorganic fibers, a color of the pigment 200 can be transmitted through the inorganic fiber body. In some examples, the transparent inorganic fiber 100 applicable to this embodiment of the present disclosure includes but is not limited to a glass fiber or a ceramic fiber. For example, the glass fiber may be a quartz glass fiber, a sodium-calcium glass fiber, or an aluminum-silicon glass fiber.

The inorganic fibers of the two types of materials have high mechanical strength, strong heat resistance, good corrosion resistance, and other advantages. A fiber reinforced composite material obtained based on the inorganic fibers of the types of materials also has excellent strength, and can be widely used in various products that have both light weight and high strength requirements.

According to the colored fiber 001 provided in this embodiment of the present disclosure, the pigment 200 is arranged inside the cavity 101 of the transparent inorganic fiber 100, and a color of the pigment 200 can be transmitted from inside of the transparent inorganic fiber 100 to outside of the transparent inorganic fiber 100 and then observed, so that the transparent inorganic fiber 100 is assigned a color. Because the pigment 200 is transmitted through the transparent inorganic fiber body through the cavity 101 of the transparent fiber, the color of the colored fiber 001 is transparent. The pigment 200 is protected by the transparent inorganic fiber 100 and is not easily worn or damaged, which improves color stability of the colored fiber 001. In addition, a material of the transparent inorganic fiber 100 is not affected by the pigment 200, so that the colored fiber 001 has all advantages of the inorganic fiber.

During preparation of the colored fiber 001, the pigment 200 is arranged inside the cavity 101 of the transparent inorganic fiber 100, so that a method for preparing the colored fiber 001 is simple and easy to operate, and costs are relatively low. In addition, a process of adding the pigment 200 to the transparent inorganic fiber 100 is not excessively limited. This is not only suitable for mass preparation of the colored fiber 001, but also is highly advantageous for quick customization of a small batch of colored fibers 001 of a specific color, so as to meet the customization requirement for fast iteration of colored fiber 001 products.

For the colored fiber 001 provided in this embodiment of the present disclosure, before the colored fiber 001 is applied, sealing processing may be performed on two ends of the transparent inorganic fiber 100, to seal the cavity of the transparent inorganic fiber 100 and prevent the pigment 200 from leaking out of the transparent inorganic fiber 100. Alternatively, the two ends of the transparent inorganic fiber 100 may be sealed in an application process of the colored fiber 001, to prevent the pigment 200 from leaking out of the transparent inorganic fiber 100. The sealing processing includes but is not limited to: sealing by using cured resin.

In some implementations, the colored fiber 001 in this embodiment of the present disclosure is a long fiber, also referred to as a continuous fiber, which is different from a short fiber. When the long fiber is used to prepare the fiber reinforced composite material, strength of the composite material is more advantageous.

In some examples, a length of the colored fiber 001 provided in this embodiment of the present disclosure in an axial direction of the colored fiber 001 is greater than 10 mm. Further, the length of the colored fiber 001 is greater than or equal to 2 cm, greater than or equal to 5 cm, greater than or equal to 10 cm, greater than or equal to 20 cm, greater than or equal to 30 cm, greater than or equal to 40 cm, greater than or equal to 50 cm, greater than or equal to 60 cm, greater than or equal to 70 cm, greater than or equal to 80 cm, greater than or equal to 90 cm, or greater than or equal to 100 cm, or the like.

The pigment 200 in this embodiment of the present disclosure may have a plurality of types of colors, including conventional colors and unconventional colors. For example, the conventional colors include but are not limited to red, green, yellow, orange, cyan, blue, purple, and black, and the unconventional colors include but are not limited to fluorescent red, fluorescent orange, fluorescent yellow, fluorescent green, gold, silver, and purple copper.

In one colored fiber 001, only one pigment 200 may be arranged, so that the colored fiber 001 is presented in only one color; or two or more colors may be simultaneously arranged, for example, two or more different colors are sequentially presented in an axial direction of the colored fiber 001.

In some examples, the pigment 200 is in a solid form. In this way, during preparation of the colored fiber 001, the pigment 200 may be blended with a good solvent of the pigment 200 to form a pigment solution, and the pigment solution is arranged inside the cavity of the transparent inorganic fiber 100, and then the pigment 200 may be attached inside the cavity of the transparent inorganic fiber 100 through drying processing.

In some other examples, the pigment 200 is in a liquid form. In this way, during preparation of the colored fiber 001, the pigment 200 may be directly used as the pigment solution, and the pigment solution is arranged inside the cavity 101 of the transparent inorganic fiber 100, and then the pigment 200 may be attached inside the cavity of the transparent inorganic fiber 100 through optional drying processing.

In this embodiment of the present disclosure, the pigment 200 may be a pigment with a fixed color, or may be a pigment with a variable color under a specific condition. A type of the pigment 200 includes but is not limited to at least one of color powder, a temperature-sensitive color changing pigment, a photosensitive color changing pigment, or an electrochromic pigment.

The color powder may be inorganic color powder (for example, oxide, chromate, sulfate, silicate, borate, molybdate, phosphate, vanadium, ferric cyanate, hydroxide, sulfide, or colored metal), or may be organic color powder (for example, a polycyclic pigment such as an azo pigment, a phthalocyanine pigment, anthracene quinone, indigo, quinolidine, or dioxine, or an aromatic methane pigment).

The temperature-sensitive color changing pigment presents one color below a temperature-sensitive color changing basic temperature, and presents another color above the temperature-sensitive color changing basic temperature. The temperature-sensitive color changing basic temperature of the temperature-sensitive color changing pigment includes but is not limited to -5°C, 0°C, 5°C, 10°C, 16°C, 21°C, 31°C, 33°C, 38°C, 43°C, 45°C, 50°C, 65°C, 70°C, and the like. For example, the temperature-sensitive color changing pigment includes but is not limited to fluorane, tri-methane, liquid crystal, spiropyran, Schiff base, and the like.

The photosensitive color changing pigment can present different colors under different light intensity (for example, changing from colorless to colored, or changing from a color to another color). For example, the photosensitive color changing pigment includes but is not limited to copper oxide, silver chloride, silver bromide, diaromatic ethylene derivatives, and azobenzene derivatives. These photosensitive color changing pigments have a good photosensitive color changing effect, color diversity, and other advantages.

The electrochromic pigment includes but is not limited to viologen and derivatives thereof, anthracene quinone, metal titanium, aromatic amine, polypidoglyz, polythiophene, and the like.

The following separately describes distribution manners of the pigment 200 inside the cavity 101 of the transparent inorganic fiber 100 by using examples.

In some implementations, as shown in FIG. 1, the entire cavity 101 of the transparent inorganic fiber 100 is filled with the pigment 200. That is, the pigment 200 forms a solid cylinder inside the cavity 101 of the transparent inorganic fiber 100. A structure and a size of the solid cylinder match a structure and a size of the cavity 101 of the transparent inorganic fiber 100, so that the solid cylinder and the cavity 101 are in close coordination.

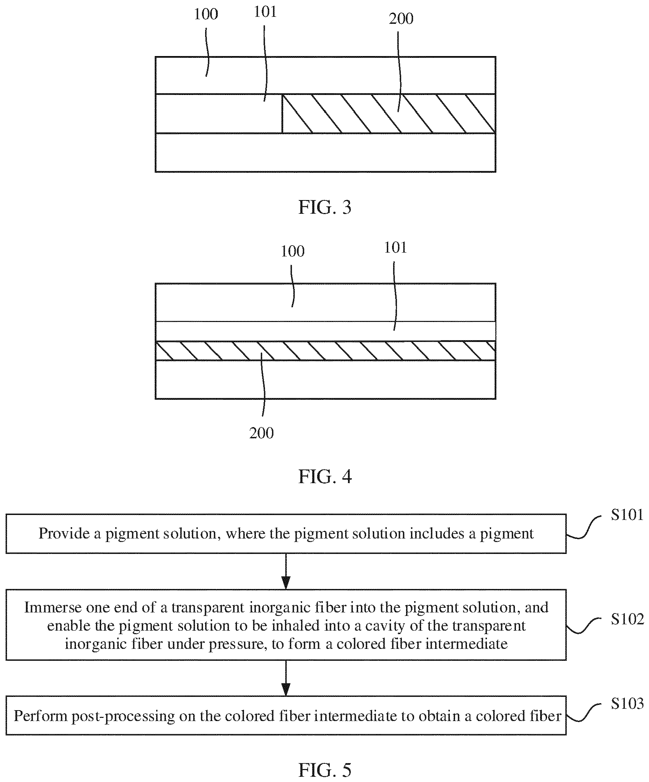

In some implementations, a part of the cavity 101 of the transparent inorganic fiber 100 does not include the pigment 200. The pigment 200 may be arranged in a part of the cavity 101 of the transparent inorganic fiber 100 in the following manner:
(1) As shown in FIG. 2, the pigment 200 is attached to all or a part of an inner wall of the cavity 101 of the transparent inorganic fiber 100 to form a colored layer, but the colored layer is of a hollow structure (that is, the colored layer has a cavity).
(2) As shown in FIG. 3, a part of the cavity 101 of the transparent inorganic fiber 100 that extends in the axial direction is fully or partially filled with the pigment 200, and another part of the cavity 101 that extends in the axial direction does not include any pigment 200. That is, a first part of the cavity of the transparent inorganic fiber 100 includes the pigment 200, and a second part of the cavity of the transparent inorganic fiber 100 does not include the pigment 200. For example, a volume of the second part of the cavity is 0.1 to 0.5 times (for example, 0.1 times, 0.15 times, 0.2 times, 0.25 times, 0.3 times, 0.35 times, 0.4 times, or 0.45 times) a total volume of the first part of the cavity and the second part of the cavity.
(3) As shown in FIG. 4, the cavity 101 of the transparent inorganic fiber 100 is not fully filled with the pigment 200, and the pigment 200 is located inside the cavity 101 of the transparent inorganic fiber 100 in a dispersed manner, so that the pigment 200 exists in the cavity 101 of the transparent inorganic fiber 100 in a plurality of forms, for example, in a form of being attached to a colored layer on an inner wall of the cavity, or in a form of dispersed particles. However, a position of the pigment 200 in the cavity of the transparent inorganic fiber 100 may change (for example, a position of the pigment 200 in the cavity may change according to different bending states of the colored fiber 001, a spatial arrangement manner of the colored fiber 001, or the like).

For any one of the foregoing transparent inorganic fibers 100, physical parameters of the transparent inorganic fiber 100 are shown below, to ensure that physical performance and color presentation performance of the colored fiber 001 reach an expected state:

A diameter (that is, an outer diameter) of the transparent inorganic fiber 100 is 5 µm to 20 µm, for example, 5 µm, 8 µm, 10 µm, 11 µm, 12 µm, 13 µm, 14 µm, 15 µm, 16 µm, 17 µm, 18 µm, 19 µm, or 20 µm.

Hollowness of the transparent inorganic fiber 100 is greater than or equal to 30%, for example, greater than or equal to 40%, greater than or equal to 50%, greater than or equal to 60%, greater than or equal to 70%, or greater than or equal to 80%. The hollowness of the fiber is a proportion of an area of a hollow part (that is, a cavity part) on a cross section of a single transparent inorganic fiber 100 to a cross-sectional area of the transparent inorganic fiber 100.

In some possible implementations, the colored fiber 001 provided in this embodiment of the present disclosure further includes an additive. The additive is configured to increase a bonding force between the pigment 200 and the inner wall of the cavity of the transparent inorganic fiber 100. For example, the additive may be a coupling agent matching the pigment 200.

According to another aspect of the embodiments of the present disclosure, a method for preparing a colored fiber is further provided, where the colored fiber is any colored fiber shown in the foregoing embodiments of the present disclosure. As shown in FIG. 5, the method for preparing a colored fiber includes the following steps:

Step S101: Provide a pigment solution, where the pigment solution includes a pigment.

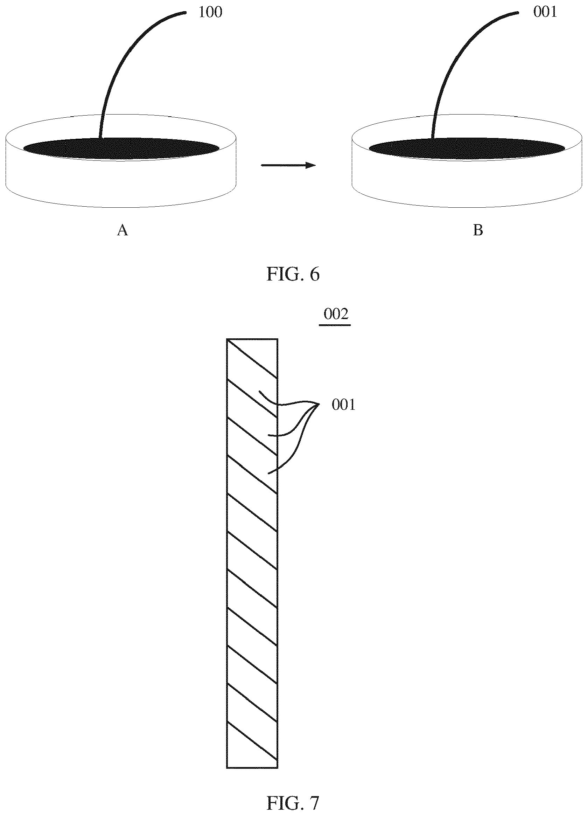

Step S102: Immerse one end of the transparent inorganic fiber into the pigment solution, and enable the pigment solution to be inhaled into a cavity of a transparent inorganic fiber under pressure, to form a colored fiber intermediate (refer to FIG. 6, where a part A shows a transparent inorganic fiber 100, and a part B shows a colored fiber 001).

Step S103: Perform post-processing on the colored fiber intermediate to obtain the colored fiber.

For step S101, composition of the pigment solution includes but is not limited to the following examples:

In some examples (1), the pigment is in a solid form. In this case, the pigment may be blended with a good solvent of the pigment to obtain a pigment solution. The good solvent is used to fully disperse the pigment in the pigment solution. For example, a mass concentration of the pigment in the pigment solution is 10% to 90%, for example, 10%, 20%, 30%, 40%, 50%, 60%, 70%, 80%, or 90%. The mass concentration of the pigment in the pigment solution may be adjusted according to an expected color effect.

In some examples (2), the pigment is in a liquid form. In this case, the pigment is directly used as the pigment solution. Further, in this example, the pigment in the liquid form may be diluted by using a solvent, to obtain different color effects.

In some examples (3), the pigment and curable resin are blended to form the pigment solution, and after the pigment solution is filled into the cavity of the transparent inorganic fiber, the curable resin is cured. A curing manner of the curable resin may be light curing or thermal curing.

For step S102, an opening end of the transparent inorganic fiber is immersed into the pigment solution, and the other opening end of the transparent inorganic fiber is not arranged inside the pigment solution, but is located outside the pigment solution, so that the pigment solution is inhaled into the cavity of the transparent inorganic fiber under pressure. This manner has good controllability, so that the pigment solution can be arranged in the cavity of the transparent inorganic fiber in various manners.

For the pressure that causes the pigment solution to be inhaled into the transparent inorganic fiber, in some examples, the pressure comes from pressure generated by a siphon effect, that is, the pigment solution is automatically inhaled into the transparent inorganic fiber under the siphon effect. In some other examples, the pressure comes from externally applied pressure. The following describes an implementation of the foregoing externally applied pressure as an example.

In some implementations, the enabling the pigment solution to be inhaled into the cavity of the transparent inorganic fiber under pressure includes: applying negative pressure to the other end of the transparent inorganic fiber, and enabling the pigment solution to be inhaled into the cavity of the transparent inorganic fiber under the negative pressure.

Negative pressure is applied to the opening end of the transparent inorganic fiber arranged outside the pigment solution, so that the pigment solution can be quickly inhaled into the cavity of the transparent inorganic fiber. In addition, a filling amount and a filling position of the pigment solution in the cavity of the transparent inorganic fiber can be adjusted by changing a value of the negative pressure and duration of applying the negative pressure, so that arrangement of the pigment is more controllable and diversified arrangement manners are provided.

In some other implementations, the enabling the pigment solution to be inhaled into the cavity of the transparent inorganic fiber under pressure includes: arranging the pigment solution in a closed container, where one end of the transparent inorganic fiber passes through the closed container in a sealed manner and is immersed into the pigment solution, and the other end is located outside the closed container; and applying positive pressure to inside of the closed container, and enabling the pigment solution to be inhaled into the cavity of the transparent inorganic fiber under the positive pressure.

Positive pressure is applied to the opening end of the transparent inorganic fiber that is arranged outside the pigment solution, so that the pigment solution can be quickly inhaled into the cavity of the transparent inorganic fiber. In addition, a filling amount and a filling position of the pigment solution in the cavity of the transparent inorganic fiber can be adjusted by changing a value of the positive pressure and duration of applying the positive pressure, so that arrangement of the pigment is more controllable and diversified arrangement manners are provided.

The foregoing negative pressure and positive pressure may be applied in a common application manner in the art, which is not specifically limited herein.

For step S103, post-processing is performed on the colored fiber intermediate to obtain the colored fiber. The post-processing manner is selected based on composition of the pigment solution. The following separately describes various post-processing manners as examples.

In some examples (1), the pigment solution includes a pigment in a solid form and a good solvent thereof, and correspondingly, the post-processing of the colored fiber intermediate includes: Drying processing is performed on the colored fiber intermediate. A temperature of the drying processing is enough to enable the good solvent of the pigment to quickly evaporate without affecting performance of the transparent inorganic fiber. For example, the temperature of the drying processing is 30°C to 200°C, for example, 40°C, 45°C, 50°C, 55°C, 60°C, 65°C, 70°C, 75°C, 80°C, 90°C, 100°C, 110°C, 120°C, 130°C, 140°C, 150°C, 160°C, 170°C, or 180°C. Further, a drying processing process may be performed, for example, in an oven.

In some examples (2), the pigment solution includes a pigment in a liquid form. Correspondingly, the performing post-processing on the colored fiber intermediate includes: sealing the colored fiber intermediate, that is, sealing two opening ends of the transparent inorganic fiber through sealing processing, to prevent the pigment in the liquid form from leaking out of the transparent inorganic fiber.

In some examples (3), the pigment solution includes a pigment and a curable resin. Correspondingly, the performing post-processing on the colored fiber intermediate includes: curing the curable resin in the colored fiber intermediate. The curing processing may be a heat curing processing manner or a light curing processing manner. Through the curing processing, not only the curable resin is fixed, but also the pigment is fixed in the curable resin.

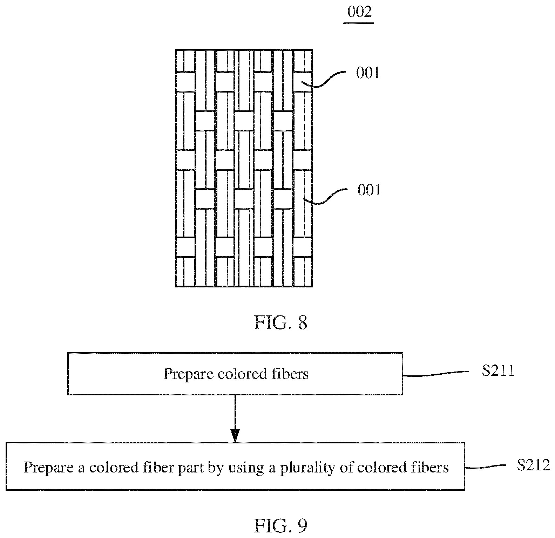

According to still another aspect of the embodiments of the present disclosure, a colored fiber part 002 is further provided. As shown in FIG. 7 or FIG. 8, the colored fiber part 002 includes a plurality of colored fibers 001 that are connected to each other, where the colored fibers 001 are shown in any one of the foregoing embodiments of the present disclosure.

The plurality of colored fibers may be provided in a form of a fiber bundle, that is, a plurality of colored fiber bundles are connected to each other to form the colored fiber part. Each fiber bundle includes nK colored fibers, where K represents a unit of 1000, and n may be, for example, an integer between 1 and 50. For example, the fiber bundle may include 1K, 3K, 6K, or 12K colored fibers.

A plurality of (for example, 2, 5, 10, 100, or more) colored fiber bundles are connected to each other to form the colored fiber part. A manner of connecting the plurality of colored fibers to each other is determined based on a structure of the colored fiber part. The manner of connecting the plurality of colored fibers to each other includes but is not limited to winding, weaving, or the like. The corresponding colored fiber part may be a fiber yarn, or may be a fiber fabric.

The methods for preparing the colored fiber part include but are not limited to the following two manners:

In some implementations, as shown in FIG. 9, the method for preparing a colored fiber part includes the following steps.

Step S211: Prepare colored fibers. For a method for preparing the colored fibers, refer to the foregoing method for preparing a colored fiber. Details are not described herein again.

Step S212: Prepare a colored fiber part by using a plurality of colored fibers.

For example, a plurality of colored fibers are wound to form a colored fiber part in a yarn form, or a plurality of colored fibers are woven to form a colored fiber part in a fabric form.

When the colored fiber part is prepared by using the plurality of colored fibers, sealing processing may be performed on two ends of each colored fiber in advance; or after the colored fiber part is formed, sealing processing may be performed on two ends of each of the plurality of colored fibers in a unified manner.

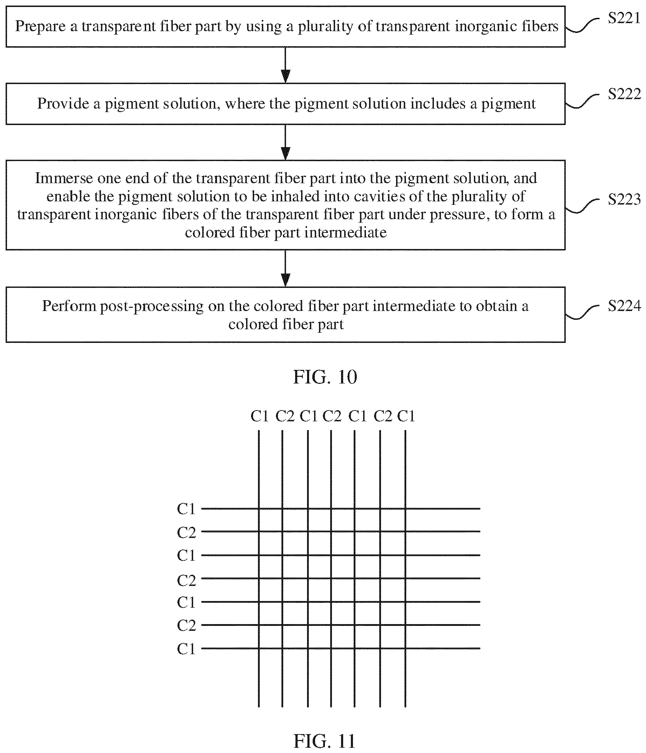

In some other implementations, as shown in FIG. 10, the method for preparing a colored fiber part includes the following steps.

Step S221: Prepare a transparent fiber part by using a plurality of transparent fibers. The transparent fiber part is formed by connecting a plurality of (for example, 2, 5, 10, 100, or more) transparent inorganic fibers to each other. Because raw materials for preparation are transparent inorganic fibers, the transparent fiber part is also transparent.

A manner of connecting the plurality of transparent inorganic fibers to each other is determined based on a structure of the transparent fiber part. The manner of connecting the plurality of transparent inorganic fibers to each other includes but is not limited to winding, weaving, or the like.

Step S222: Provide a pigment solution, where the pigment solution includes a pigment. For composition of the pigment solution, refer to the foregoing description. Details are not described herein again.

Step S223: Immerse one end of the transparent fiber part into the pigment solution, and enable the pigment solution to be inhaled into cavities of the plurality of transparent inorganic fibers of the transparent fiber part under pressure, to form a colored fiber part intermediate.

For example, negative pressure is applied to the other end of the transparent fiber part (specifically, negative pressure is applied to opening ends that are of the plurality of transparent inorganic fibers and that are located outside the pigment solution), so that the pigment solution is inhaled into the cavities of the plurality of transparent fibers of the transparent fiber part under the negative pressure.

Step S224: Perform post-processing on the colored fiber part intermediate to obtain the colored fiber part. For a manner of performing post-processing on the colored fiber part intermediate, refer to the foregoing manner of performing post-processing on the colored fiber intermediate.

Forms of the colored fiber part in this embodiment of the present disclosure include but are not limited to a fiber yarn, a fiber fabric, and the like. The following separately describes the two structural forms as examples.

The fiber yarn may be formed by connecting a plurality of colored fibers in a winding manner. Winding between the plurality of colored fibers is also referred to as twisting, where a twisting direction may be S twisting or Z twisting. For example, FIG. 7 shows an example of a structure of a fiber yarn.

Physical parameters of the fiber yarn in this embodiment of the present disclosure may be shown as follows:
A hollow rate of the fiber yarn is greater than or equal to 90%, which includes but is not limited to 90%, 91%, 92%, 93%, 94%, 95%, 96%, 97%, 98%, 99%, and the like. The hollow rate is a proportion of a quantity of transparent inorganic fibers that are included in the fiber yarn and have a hollow structure to a total quantity of all transparent inorganic fibers in the fiber yarn.

A twist of the fiber yarn is 10 T/m to 50 T/m, for example, 50 T/m, where the twist of the fiber yarn is a quantity of twists in a unit length of the fiber yarn.

In some examples, for a method for preparing a colored fiber yarn, refer to FIG. 6. One end of the transparent fiber yarn is immersed into a pigment solution, so that the pigment solution is inhaled into a cavity of a plurality of transparent inorganic fibers of the transparent fiber yarn under pressure, to form a colored fiber yarn intermediate. Then, the colored fiber yarn intermediate is taken out and dried to obtain the colored fiber yarn.

The fiber fabric includes a fiber cloth, a fiber ribbon, a unidirectional fiber fabric, a stereoscopic fiber fabric, or the like, and may be formed by connecting a plurality of colored fibers or a plurality of fiber yarns in a weaving manner.

A common weaving manner may be used as a weaving manner of the fiber fabric. For example, the weaving manner of the fiber fabric includes but is not limited to flat weaving, twill weaving, and the like. For example, FIG. 8 shows an example of a structure of a fiber fabric.

In some examples, the fiber fabric is a fiber cloth, and a size of the fiber fabric may be shown as follows: a thickness is 0.2 mm to 0.8 mm, a width is 80 mm to 150 mm, and a length is 100 mm to 300 mm. For example, the thickness is 0.5 mm, the width is 100 mm, and the length is 200 mm.

The colored fiber part provided in this embodiment of the present disclosure includes a plurality of colored fibers. In some examples, all fibers included in the colored fiber part are the colored fibers provided in this embodiment of the present disclosure. In some other examples, some of the fibers included in the colored fiber part is the colored fibers provided in this embodiment of the present disclosure.

For a plurality of colored fibers of the colored fiber part, the plurality of colored fibers may be made to be in a same color, that is, only one color is presented. Alternatively, at least some colored fibers may be made to be in different colors. This case includes: the colors of some colored fibers are different (correspondingly, the colors of some colored fibers are the same); and the colors of all colored fibers are different.

For example, the colored fiber part is a fiber fabric, and includes a plurality of colored fibers (referred to as longitudinal colored fibers) that are sequentially distributed in a longitudinal direction and parallel to each other and a plurality of colored fibers (referred to as latitudinal colored fibers) that are sequentially distributed in a latitudinal direction and parallel to each other.

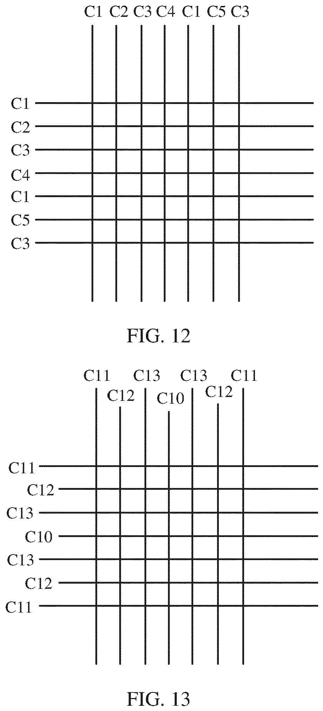

In the fiber fabric, at least some colored fibers have different colors. Implementations of the different colors include but are not limited to: performing alternate coloring by using a plurality of colors, performing irregular coloring by using a plurality of colors, performing regular coloring by using a plurality of colors to form a specific pattern, performing gradient coloring by using a plurality of colors, and the like. The following separately describes the implementations as examples.
(1) In some examples, a plurality of latitudinal colored fibers are made to be in the same color or alternately colored, and a plurality of longitudinal colored fibers are alternately colored. For alternate coloring, two different colors may be used for alternate coloring, for example, a first color - a second color - the first color - the second color..., and three or more different colors may be used for alternate coloring, for example, a first color - a second color - a third color - the first color - the second color - the third color... FIG. 11 shows an example of a fiber fabric in an alternate coloring manner. In FIG. 11, a first color is represented by C1, and a second color is represented by C2.
(2) In some examples, the plurality of latitudinal colored fibers are made to be in a same color, or are sequentially and alternately colored, or are colored irregularly, and the plurality of longitudinal colored fibers are colored irregularly. For irregular coloring, two, three, four, or more colors may be used for irregular coloring. For example, a first color - a second color - a third color - the second color - a fourth color - the first color - the third color. FIG. 12 shows an example of a fiber fabric in an irregular coloring manner. In FIG. 12, a first color is represented by C1, a second color is represented by C2, a third color is represented by C3, a fourth color is represented by C4, and a fifth color is represented by C5.
(3) In some examples, colors of a plurality of latitudinal colored fibers are exactly the same, or gradient coloring is performed according to a specific rule; and gradient coloring is performed on a plurality of longitudinal colored fibers according to a specific rule. Gradient coloring is a process of adjusting a color depth based on a primary color. For example, in a direction from a colored fiber located in a middle position to colored fibers located on two sides, colors of a plurality of colored fibers gradually become lighter. FIG. 13 shows an example of a fiber fabric in a gradient coloring manner. A primary color in FIG. 13 is represented by C10, and C13, C12, and C11 are colors that gradually lighten based on C10.
(4) In some examples, a plurality of latitudinal colored fibers are made to be in a same color, or are sequentially and alternately colored, and a plurality of longitudinal colored fibers are regularly colored, to form a particular pattern. For example, the pattern includes but is not limited to an indication mark, a product shape mark, or the like.

In some examples, a method for preparing the colored fiber fabrics is as follows: Transparent inorganic fibers that need to be colored in the transparent fiber part are classified by a coloring manner, all types of transparent inorganic fibers are sequentially colored so that the transparent inorganic fibers have a specific color, and then the transparent inorganic fibers are dried to achieve a purpose of color fixing. After all types of transparent inorganic fibers are sequentially colored in the foregoing manner, a colored fiber fabric may be obtained.

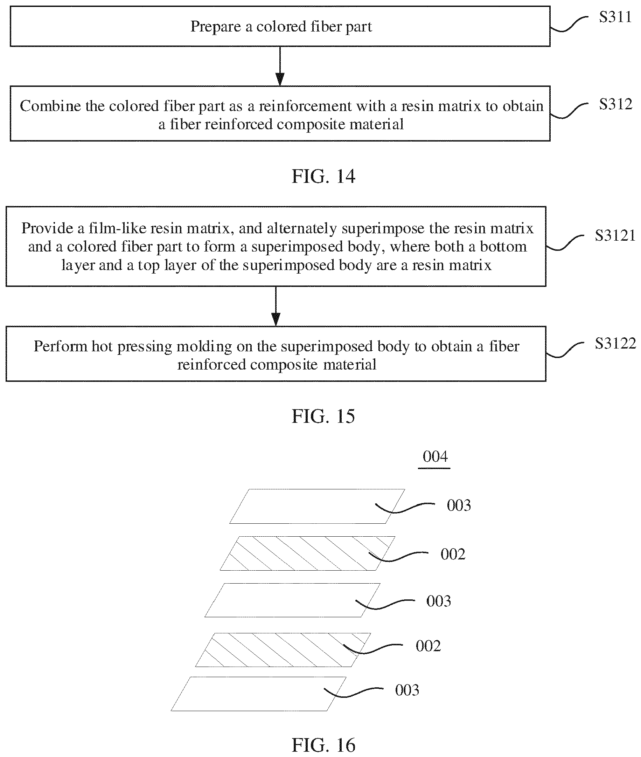

According to still another aspect of the embodiments of the present disclosure, as shown in FIG. 16, a fiber reinforced composite material 004 is provided. The fiber reinforced composite material 004 includes a resin matrix 003 and a reinforcement, and the reinforcement is located inside the resin matrix 003. The reinforcement includes any one of the foregoing colored fibers 001 or any one of the foregoing colored fiber parts 002 in the embodiments of the present disclosure.

In some examples, the reinforcement includes a plurality of colored fibers that do not have a connection relationship. The plurality of colored fibers may exist in a form of a fiber bundle. For example, a plurality of fiber bundles are arranged according to a specific geometric pattern, and there is no connection relationship between the plurality of fiber bundles.

In some other examples, the reinforcement includes a colored fiber part, where the colored fiber part is formed by connecting a plurality of colored fibers to each other as shown above.

The fiber reinforced composite material provided in this embodiment of the present disclosure may include one layer of reinforcement, or may include a plurality of layers of reinforcements that are sequentially distributed at intervals. In a case in which a plurality of layers of reinforcements are included, a resin matrix exists between any two adjacent layers of reinforcements. In addition, for arrangement manners of colored fibers or colored fiber parts at the plurality of layers of reinforcements, the arrangement manners may be the same at all layers, may be the same at some layers, or may be different at all layers.

For example, the resin matrix may be thermosetting resin, or may be thermoplastic resin. The thermosetting resin includes but is not limited to epoxy resin, phenolic resin, unsaturated resin, and a curing agent corresponding to each of the foregoing optional resins. The thermoplastic resin includes but is not limited to polyester resin. For example, the polyester resin includes but is not limited to polycarbonate (Polycarbonate, PC) and thermoplastic urethane (Thermoplastic Urethane, TPU) elastomer.

In some examples, a mass ratio of the reinforcement to the resin matrix is (0.1-25):1, for example, 0.5:1, 1:1, 5:1, 10:1, 15:1, 20:1, or 25:1.

A fiber reinforced composite material obtained by combining a thermoplastic resin and a colored fiber part has high strength, excellent fatigue resistance, high impact toughness, excellent creep resistance, and other advantages. A fiber reinforced composite material obtained by combining a thermosetting resin and a colored fiber part has high strength, light weight, excellent corrosion resistance, excellent heat resistance, and other advantages.

Based on use of the colored fiber provided in the embodiments of the present disclosure, the fiber reinforced composite material provided in this embodiment of the present disclosure not only has a specific color, but also can present various appearance effects. In addition, the fiber reinforced composite material obtains a fiber reinforcement effect, so that the fiber reinforced composite material has at least advantages such as light weight, high strength, and excellent chemical resistance, and has a much higher mechanical performance than the resin matrix.

According to still another aspect of the embodiments of the present disclosure, a method for preparing a fiber reinforced composite material is provided, where the fiber reinforced composite material is any one of the foregoing fiber reinforced composite materials in the embodiments of the present disclosure. The method for preparing a fiber reinforced composite material may include the following two manners:
(1) In some possible implementations, as shown in FIG. 14, the method for preparing a fiber reinforced composite material includes:
   Step S311: Prepare a colored fiber part. For a method for preparing the colored fiber part, refer to the foregoing method for preparing a colored fiber part.

For example, the preparing a colored fiber part includes: preparing a transparent fiber part by using a plurality of transparent inorganic fibers;
providing a pigment solution including a pigment; immersing one end of the transparent fiber part into the pigment solution, and enabling the pigment solution to be inhaled into cavities of the transparent inorganic fibers of the transparent fiber part under pressure, to form a cavity of a colored fiber part intermediate; and performing post-processing on the colored fiber part intermediate to obtain the colored fiber part. For a manner of performing post-processing on the colored fiber part intermediate, refer to the foregoing manner of performing post-processing on the colored fiber intermediate. For example, the post-processing may be drying processing.

In some examples, the enabling the pigment solution to be inhaled into cavities of the transparent inorganic fibers of the transparent fiber part under pressure includes: applying negative pressure to the other end of the transparent fiber part, and enabling the pigment solution to be inhaled into the cavities of the transparent inorganic fibers of the transparent fiber part under the negative pressure; or applying positive pressure to a system in which the pigment solution is located, and enabling the pigment solution to be inhaled into the cavities of the transparent inorganic fibers of the transparent fiber part under the positive pressure.

Step S312: Combine the colored fiber part as a reinforcement with a resin matrix to obtain the fiber reinforced composite material.

As shown in FIG. 15, an implementation of combining the colored fiber part and the resin matrix in step S312 includes the following steps:
Step S3121: Provide a film-like resin matrix, and alternately superimpose the resin matrix and the colored fiber part to form a superimposed body. As shown in FIG. 16, the film-like resin matrix 003 and the colored fiber part 002 are alternately superposed to form the superimposed body, where both a bottom layer and a top layer of the superimposed body are the resin matrix 003.

A material of the resin matrix 003 may be thermoplastic resin, or may be thermosetting resin. A quantity of times of alternating between the resin matrix 003 and the colored fiber part 002 is adjusted based on a thickness of the fiber reinforced composite material, for example, the quantity of times of alternating is greater than or equal to 2.

When the colored fiber part is a fiber yarn, a plurality of fiber yarns may be laid on a surface of the resin matrix in a specific arrangement manner. For example, the plurality of fiber yarns are sequentially distributed in a longitudinal direction and a latitudinal direction. When the colored fiber part is a fiber fabric, one or more fiber fabrics may be directly laid on the surface of the resin matrix.

Further, before step S3121 is performed, the resin matrix and the colored fiber part may be separately cut, so that sizes of the two cut parts meet a preparation requirement of a structural part, where the structural part is a product prepared by using the fiber reinforced composite material. For example, the sizes of the resin matrix and the colored fiber part after cutting are slightly greater than a size of the structural part.

Step S3122: Perform hot pressing molding on the superimposed body to obtain the fiber reinforced composite material. The superimposed body is obtained in step S3121. The hot pressing molding process may be performed in a hot pressing mold. In addition, a temperature and duration of the hot pressing molding are determined based on a specific material of the resin matrix, provided that the resin matrix can be effectively cured.

In some examples, a structural part may be prepared based on the prepared fiber reinforced composite material by using a computerized numerical control (Computerized Numerical Control, CNC) machining technology (referred to as CNC machining).

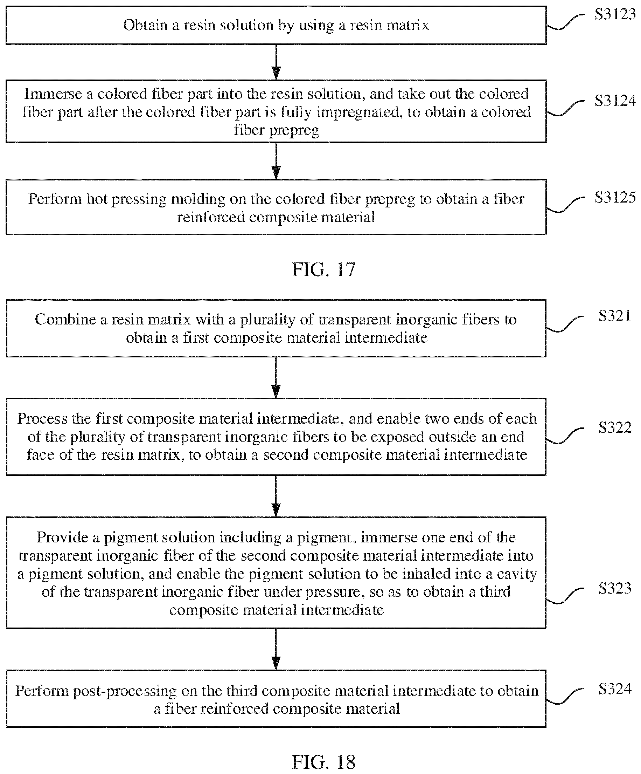

When the resin matrix is the thermosetting resin, as shown in FIG. 17, an implementation of combining the colored fiber part and the resin matrix in step S312 may further include the following steps:

Step S3123: Obtain a resin solution by using the resin matrix: If the resin matrix is in a liquid form and has a proper viscosity, directly use the resin matrix; or if resin matrix has a high viscosity, dilute the resin matrix by using a good solvent thereof to obtain a resin solution with a proper viscosity.

Step S3124: Immerse the colored fiber part into the resin solution, and take out the colored fiber part after the colored fiber part is fully impregnated, to obtain a colored fiber prepreg. For a resin solution including a solvent, the solvent in a corresponding colored fiber prepreg needs to be evaporated.

Further, a quantity of layers of the colored fiber prepreg is determined based on the thickness of the fiber reinforced composite material. For example, a plurality of colored fiber prepregs may be sequentially laminated to obtain a colored fiber prepreg with a target thickness. A quantity of laminated layers is adjusted based on the thickness of the fiber reinforced composite material, for example, the quantity of laminated layers is greater than or equal to 2.

Step S3125: Perform hot pressing molding on the colored fiber prepreg to obtain the fiber reinforced composite material. The hot pressing molding process may be performed in a hot pressing mold. In addition, a temperature and duration of the hot pressing molding are determined based on a specific material of the resin matrix, provided that the resin matrix can be effectively cured.

When the colored fiber part is a fiber yarn, a plurality of fiber yarns may be laid in a specific arrangement manner and impregnated in the resin solution. For example, the plurality of fiber yarns are sequentially distributed in a longitudinal direction and a latitudinal direction. When the colored fiber part is a fiber fabric, one or more fiber fabrics may be directly laid and impregnated in the resin solution.

Further, before step S3124 is performed, the colored fiber parts may be cut, so that a size of the colored fiber part obtained after cutting meets a preparation requirement of a structural part, where the structural part is a product prepared by using the fiber reinforced composite material. For example, the size of the colored fiber part after cutting is slightly greater than a size of the structural part.

In some examples, a structural part may be prepared based on the prepared fiber reinforced composite material by using a CNC machining technology.

(2) In some possible implementations, as shown in FIG. 18, the method for preparing a fiber reinforced composite material includes the following steps:
Step S321: Combine a resin matrix and a plurality of transparent inorganic fibers to obtain a first composite material intermediate. For a manner of combining the resin matrix and the plurality of transparent inorganic fibers, refer to the foregoing manner of combining the resin matrix and the colored fiber part. Details are not described herein again.

The plurality of transparent inorganic fibers may exist in a form of a transparent fiber part, for example, a transparent fiber yarn or a transparent fiber cloth; or the plurality of transparent inorganic fibers may exist in a form of a fiber bundle, for example, a plurality of transparent fiber bundles are arranged according to a specific geometric pattern.

Step S322: Process the first composite material intermediate, and enable two ends of each of the plurality of transparent inorganic fibers to be exposed outside an end face of the resin matrix, to obtain a second composite material intermediate.

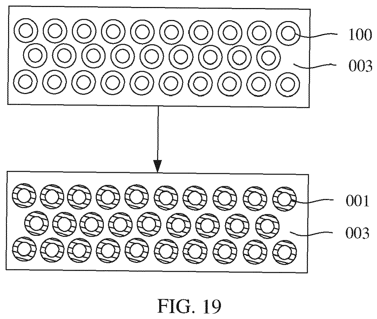

The resin matrix in the second composite material intermediate is a cured resin matrix obtained after hot pressing molding is performed on a raw-material resin matrix. As shown in FIG. 19, the second composite material intermediate includes a resin matrix 003 and a plurality of transparent inorganic fibers 100.

In some examples, the first composite material intermediate may be processed by using a CNC machining process, so that two ends of the transparent fiber part are exposed outside the end face of the resin matrix. In this way, the two opening ends of the plurality of transparent inorganic fibers included in the transparent fiber part are located outside the end face of the resin matrix, instead of being sealed, and a size of the obtained second composite material intermediate needs to be greater than a size of a finally prepared structural part.

Step S323: Provide a pigment solution including a pigment, immerse one end of the transparent inorganic fiber of the second composite material intermediate into the pigment solution, and enable the pigment solution to be inhaled into a cavity of the transparent inorganic fiber under pressure, so as to obtain a third composite material intermediate.

As shown in FIG. 19, after the pigment solution is inhaled by inner cavities of all transparent inorganic fibers in the second composite material intermediate, the third composite material intermediate includes a resin matrix 003 and a reinforcement formed by a plurality of colored fibers 001.

For step S323, the enabling the pigment solution to be inhaled into a cavity of the transparent inorganic fiber under pressure includes: (1) applying negative pressure to the other end of the transparent inorganic fiber of the second composite material intermediate, and enabling the pigment solution to be inhaled into the cavity of the transparent inorganic fiber under the negative pressure; or (2) applying positive pressure to a system in which the pigment solution is located, and enabling the pigment solution to be inhaled into the cavity of the transparent inorganic fiber under the positive pressure.

Step S324: Perform post-processing on the third composite material intermediate to obtain the fiber reinforced composite material. For a manner of performing post-processing on the third composite material intermediate, refer to the foregoing manner of performing post-processing on the colored fiber intermediate. For example, the post-processing may be drying processing.

Step S324: The fiber reinforced composite material includes a plurality of colored fibers, where the plurality of colored fibers may exist in a form of a colored fiber part, for example, a colored fiber yarn or a colored fiber cloth; or the plurality of transparent inorganic fibers may exist in a form of a colored fiber bundle, for example, a plurality of colored fiber bundles are arranged according to a specific geometric pattern.

In some examples, post-processing performed on the third composite material intermediate is drying processing, and the drying processing may be drying processing at a set temperature. For example, for drying processing performed in an oven, a drying temperature should be enough to enable the solvent in the pigment solution to be fully evaporated.

According to the foregoing method for preparing a fiber reinforced composite material in this embodiment of the present disclosure, a fiber reinforced composite material with richer color effects can be prepared. Compared with the conventional technology in which a manufacturing process of a fiber reinforced composite material is long, material performance stability is poor, and costs are high, the method for preparing a fiber reinforced composite material of a specific color provided in this embodiment of the present disclosure has advantages such as a short manufacturing process, low costs, and high material performance stability.

According to still another aspect of the embodiments of the present disclosure, a structural part is further provided. The structural part is prepared by using the foregoing fiber reinforced composite material in the embodiments of the present disclosure.

In some examples, the structural part includes but is not limited to a housing part, a structural part, a plate, and the like. For example, the housing may be used in an electronic product (for example, a computer, a mobile phone, a sound box, or a camera), a home product, a vehicle product (for example, a car), a chemical equipment product, and the like; the structural part includes but is not limited to a screw, a clamp, a gear, a bearing, a sealing ring, and the like; and the plate includes but is not limited to a flat plate, a wave plate, and a bent plate.

The methods for preparing a structural part include but are not limited to the following: (1) First preparing a fiber reinforced composite material according to the foregoing method, and then preparing a structural part by using a CNC machining process; (2) preparing, based on a colored fiber part and a resin matrix, a structural part by using a wet molding process; and (3) preparing, based on a colored fiber part and a resin matrix, a structural part by using a resin transfer molding process.

For terms "every", "a plurality of", "any one", and the like used in the embodiments of the present disclosure, "a plurality of" includes two or more, "each" means each in corresponding "a plurality of", and "anyone" means any one in corresponding "a plurality of".

The foregoing descriptions are merely intended to help a person skilled in the art understand the technical solutions of the present disclosure, and are not intended to limit the present disclosure. Any modification, equivalent replacement, or improvement made without departing from the spirit and principle of the present disclosure shall fall within the protection scope of the present disclosure.

## Claims

1. A colored fiber, wherein the colored fiber (001) comprises a transparent inorganic fiber (100) and a pigment (200), the transparent inorganic fiber (100) is of a hollow structure, and the pigment (200) is located inside a cavity (101) of the transparent inorganic fiber.

2. The colored fiber according to claim 1, wherein a length of the colored fiber (001) is greater than 10 mm.

3. The colored fiber according to claim 1, wherein the pigment (200) comprises at least one of color powder, a temperature-sensitive color changing pigment, a photosensitive color changing pigment, or an electrochromic pigment.

4. The colored fiber according to any one of claims 1 to 3, wherein a part of the cavity of the transparent inorganic fiber (100) does not comprise the pigment (200).

5. The colored fiber according to any one of claims 1 to 3, wherein the entire cavity of the transparent inorganic fiber (100) is filled with the pigment (200).

6. A colored fiber part, wherein the colored fiber part (002) comprises a plurality of colored fibers (001) connected to each other; and
the colored fiber (001) is as described in any one of claims 1 to 5.

7. The colored fiber part according to claim 6, wherein the colored fiber part (002) is a fiber yarn or a fiber fabric.

8. The colored fiber part according to claim 6 or 7, wherein at least some of the plurality of colored fibers (001) of the colored fiber part (002) have different colors.

9. The colored fiber part according to claim 6 or 7, wherein the plurality of colored fibers (001) of the colored fiber part (002) have a same color.

10. A fiber reinforced composite material, wherein the fiber reinforced composite material comprises a resin matrix and a reinforcement, and the reinforcement is located inside the resin matrix; and
the reinforcement comprises the colored fiber according to any one of claims 1 to 5 or the colored fiber part according to any one of claims 6 to 9.

11. A structural part, wherein the structural part is prepared by using the fiber reinforced composite material according to claim 10.

12. A method for preparing a colored fiber, wherein the colored fiber is as described in any one of claims 1 to 5, and the method for preparing a colored fiber comprises: providing a pigment solution, wherein the pigment solution comprises a pigment;
immersing one end of a transparent inorganic fiber into the pigment solution, and enabling the pigment solution to be inhaled into a cavity of the transparent inorganic fiber under pressure, to form a colored fiber intermediate; and
performing post-processing on the colored fiber intermediate to obtain the colored fiber.

13. The method for preparing a colored fiber according to claim 12, wherein the enabling the pigment solution to be inhaled into a cavity of the transparent inorganic fiber under pressure comprises:
applying negative pressure to the other end of the transparent inorganic fiber, and enabling the pigment solution to be inhaled into the cavity of the transparent inorganic fiber under the negative pressure.

14. A method for preparing a fiber reinforced composite material, wherein the fiber reinforced composite material is as described in claim 10; and
the method for preparing a fiber reinforced composite material comprises: preparing a colored fiber part; and
combining the colored fiber part as a reinforcement with a resin matrix to obtain the fiber reinforced composite material.

15. The method for preparing a fiber reinforced composite material according to claim 14, wherein the preparing a colored fiber part comprises:
preparing a transparent fiber part by using a plurality of transparent inorganic fibers;
providing a pigment solution comprising a pigment;
immersing one end of the transparent fiber part into the pigment solution, and enabling the pigment solution to be inhaled into cavities of the transparent inorganic fibers of the transparent fiber part under pressure, to form a colored fiber part intermediate; and
performing post-processing on the colored fiber part intermediate to obtain the colored fiber part.

16. The method for preparing a fiber reinforced composite material according to claim 15, wherein the enabling the pigment solution to be inhaled into cavities of the transparent inorganic fibers of the transparent fiber part under pressure comprises:
applying negative pressure to the other end of the transparent fiber part, and enabling the pigment solution to be inhaled into the cavities of the transparent inorganic fibers of the transparent fiber part under the negative pressure.

17. A method for preparing a fiber reinforced composite material, wherein the fiber reinforced composite material is as described in claim 10; and
the method for preparing a fiber reinforced composite material comprises: combining a resin matrix with a plurality of transparent inorganic fibers to obtain a first composite material intermediate;
processing the first composite material intermediate, and enabling two ends of each of the plurality of transparent inorganic fibers to be exposed outside an end face of the resin matrix, to obtain a second composite material intermediate;
providing a pigment solution comprising a pigment, immersing one end of the transparent inorganic fiber of the second composite material intermediate into the pigment solution, and enabling the pigment solution to be inhaled into a cavity of the transparent inorganic fiber under pressure, so as to obtain a third composite material intermediate; and
performing post-processing on the third composite material intermediate to obtain the fiber reinforced composite material.

18. The method for preparing a fiber reinforced composite material according to claim 17, wherein the enabling the pigment solution to be inhaled into a cavity of the transparent inorganic fiber under pressure comprises:
applying negative pressure to the other end of the transparent inorganic fiber of the second composite material intermediate, and enabling the pigment solution to be inhaled into the cavity of the transparent inorganic fiber under the negative pressure.
